# EUROPÄISCHE PATENTSCHRIFT

(11) **EP 2 288 829 B1**
(45) Veröffentlichungstag und Bekanntmachung des Hinweises auf die Patenterteilung: **11.05.2016**
(21) Anmeldenummer: 09749668.1
(22) Anmeldetag: 20.03.2009
(51) Int. Cl.: F16J 3/06, F16F 9/04

(54) **KLEMMKONTUR MIT DICHTUNGSPROFIL**
CLAMPING CONTOUR HAVING SEALING PROFILE
CONTOUR DE SERRAGE À JOINT D'ÉTANCHÉITÉ PROFILÉ

(30) Priorität: 17.05.2008 DE 102008024109
(43) Veröffentlichungstag der Anmeldung: 02.03.2011
(73) Patentinhaber: Continental Teves AG & Co. OHG, 60488 Frankfurt (DE)
(72) Erfinder: MÖRITZ, Matthias, Neustadt 31535 (DE)
(86) Internationale Anmeldenummer: PCT/EP2009/053290
(87) Internationale Veröffentlichungsnummer: WO 2009/141178

(56) Entgegenhaltungen:
- EP-A- 1 705 416
- DE-A- 19 543 103
- DE-B3- 10 354 574

## Beschreibung

Die Erfindung betrifft eine Klemmkontur im Verbindungsbereich eines mit einem plastisch oder elastisch verformbaren Schlauch oder Balg durch Klemmung verbundenen Bauteils, wobei die Klemmkontur auf der Außenoberfläche des Bauteils ausgebildet ist und die Klemmung des Schlauches oder Balges auf der Außenoberfläche der Klemmkontur durch geeignete Spannmittel erfolgt.

Ein Beispiel für eine solche Verbindung ist die eines Rollbalgs einer Schlauchrollbalg-Luftfeder mit den zugehörigen Anschlussteilen oder Bauteilen, nämlich die Verbindung mit dem Luftfederdeckel oder mit dem Luftfederkolben.

Befestigungen für solche Rollbälge sind in einer Vielzahl von Varianten bekannt. Üblicherweise werden am Umfang des Rollbalges wirkende Klemmungen verwendet oder aber Spannringe, die um den Rollbalg herum gelegt werden und die Balgwand auf der Oberfläche des jeweiligen Anschlussteiles, d.h. am Luftfederdeckel oder am Abrollkolben festklemmen. Zur Verbesserung der Klemmwirkung können die Spannringe oder die Balgenden besondere Profilgestaltungen aufweisen.

Auch sind Befestigungen in Form von Bördelungen bekannt, bei denen der Balg ggf. mit einem endseitigen Kerndraht versehen sein kann und/oder auch mit verstärkten Verdickungen, die nach dem Fertigstellen der Verbindung von der Bördelkante umfasst werden.

Darüber hinaus gibt es viele weitere Anwendungsfälle, in denen druckbeaufschlagte Bauteile miteinander zuverlässig und druckdicht verbunden werden müssen, damit eine einwandfreie Funktion des Bauteileverbundes gewährleistet ist, beispielsweise der Anschluss von Schläuchen aus elastomerem Werkstoff an Verbindungsteile bzw. Stutzen in Systemen, welche unter Druck stehende Fluide, wie Wasser, Luft oder Öl, in sich führen. Auch hier erfolgt die Verbindung oft über eine Verklemmung mit speziell dafür ausgebildeten Spannmitteln, nämlich geschlossenen metallischen Spannringen, welche durch plastisches, radiales Verformen auf die Wandung des verformbaren Schlauches oder Balges fest aufgepresst werden. Im Betriebszustand werden der Schlauch oder Balg, mithin auch die Befestigungsteile, mit Druckmedium beaufschlagt, wodurch unter dynamischer Belastung eine federnde Relativbewegung zwischen den Befestigungsteilen möglich ist.

Es versteht sich eigentlich von selbst, dass eine nachlassende oder gar fehlerhafte Klemmverbindung zwischen den Bauteilen zu einer spürbaren Verschlechterung oder gar zu einem gänzlichen Versagen des Bauteilverbundes führen kann. Man ist daher ständig bestrebt, die Klemmverbindungen zwischen den druckbeaufschlagten Bauteilen zu verbessern.

Die DE 103 54 574 B3 offenbart eine Luftfeder mit einem Schlauchrollbalg, bei der die Balgenden mit Hilfe eines Spannringes auf ein Befestigungsteil/Anschlussteil geklemmt werden. Das jeweilige Befestigungsteil weist umfangsseitig im vorgesehenen Befestigungsbereich ein im Querschnitt aus Nuten und vorspringende trapezförmigen Erhebungen gebildetes Profil auf, in welches das Balgende mit Hilfe der außen umliegenden Spannringe eingepresst und eingeformt wird. Die trapezförmigen Erhebungen sollen zu einer deutlichen Verbesserung der Dichtheit führen, ohne dass die Gefahr einer Beschädigung der Balgwandung besteht. Nachteilig bei dieser Ausbildung ist einerseits die doch recht umfangreiche profilgebende Bearbeitung von Teilen der Außenoberfläche der Anschlussteile. Andererseits ist durch die unterschiedlichen WärmeausdehnungsKoeffizienten der einzelnen Bauteile eine gleich bleibende Dichtung auch bei großen Temperaturschwankungen nicht immer gewährleistet.

Der Erfindung liegt die Aufgabe zugrunde, eine Klemmkontur für ein druckbeaufschlagtes Bauteil, beispielsweise eine Klemmkontur an einem Abrollkolben oder eine Anschlussplatte einer Schlauchrollbalg-Luftfeder, bereitzustellen, welche eine zuverlässige, druckdichte Verklemmung der beteiligten Bauteile ermöglicht, Undichtigkeiten auch bei Temperaturschwankungen verhindert, auf einfache Weise herzustellen ist und Beschädigungen des schlauchförmigen Teils beim Festspannen verringert.

Gelöst wird diese Aufgabe durch die Merkmale des Hauptanspruchs. Weitere vorteilhafte Ausbildungen sind in den Unteransprüchen offenbart.

Dabei sind innerhalb der Klemmkontur Dichtungsprofile angeordnet und mit der Klemmkontur fest verbunden. Die Dichtungsprofile bestehen aus einem zum Material der Klemmkontur unterschiedlichen Material, und sind in Richtung des Schlauches oder Balges aus der Profillinie der Klemmkontur vorspringend ausgebildet. Damit wird in jedem Fall die Flächenpressung zwischen Dichtelement / Dichtungsprofil und dem plastisch oder elastisch verformbaren Schlauch oder Balg aufrechterhalten. Auch wenn sehr unterschiedliche Temperaturausdehnungskoeffizienten zwischen den bei der Klemmung beteiligten Bauteile existieren, wie sie beispielsweise bei einer Verbindung zwischen Abrollkolben und Rollbalg einer Luftfeder existieren, bei der der Kolben aus Kunststoff, der Rollbalg aus Gummi mit Verstärkungsfäden und der Spannring aus Stahl bestehen, verhindert die erfindungsgemäße Ausbildung Undichtigkeiten und Beschädigungen der Bauteile durch zu hohe Spannkräfte.

Eine vorteilhafte Weiterbildung besteht darin, dass die Dichtungsprofile in auf der Außenoberfläche der Klemmkontur angeordneten Nuten eingesetzt sind. Dies gibt zusätzlichen Halt und erleichtert die korrekte Platzierung der Dichtungsprofile/Dichtelemente.

Dies gilt ebenso für eine weitere vorteilhafte Ausbildung, die darin besteht, dass die Dichtungsprofile mit der Klemmkontur durch Kleben oder Vulkanisieren verbunden sind.

Eine weitere vorteilhafte Ausbildung besteht darin, dass die Dichtungsprofile aus einem im Vergleich zum Material der Klemmkontur oder mit im Vergleich zum Material des Schlauches oder Balges weicheren Material ausgebildet sind. Das reduziert u. a. die zur Dichtigkeit erforderlichen Spannkräfte.

Eine weitere vorteilhafte Ausbildung besteht darin, dass die Dichtungsprofile aus Kunststoff bestehen. Kunststoffe lassen sich leicht jeder Form anpassen, sind einfach zu verarbeiten und können problemlos mit anderen Werkstoffen verbunden werden.

Eine weitere vorteilhafte Ausbildung besteht darin, dass die Dichtungsprofile aus Gummi bestehen. So können die Dichtungsprofile beispielsweise als Gummiprofile gepresst oder extrudiert oder als Abschnitte eines Gummischlauches hergestellt und durch Klebung oder Vulkanisation leicht mit in die Klemmkontur der Anschlussbauteile integriert werden.

Eine weitere vorteilhafte Ausbildung besteht darin, dass die Dichtungsprofile als sich zu ihrem dichtenden Ende verjüngende Dichtlippen ausgebildet sind. Diese geometrische Ausbildung erhöht die elastische Verformbarkeit noch einmal gravierend. Natürlich können auch alle anderen Dichtungsprofile ausgeführt werden, beispielsweise fächerförmige, dachförmige oder U-förmige Dichtungen. Auch können mehrere nebeneinander liegende Dichtungsprofile innerhalb der Klemmkontur angeordnet sein.

Eine weitere vorteilhafte Ausbildung besteht darin, dass im Klemmbereich Erhebungen und Vertiefungen vorgesehen sind, welche zusätzlich die Klemmwirkung durch Formschluss beim Festspannen erhöhen.

In besonders vorteilhafter Weise kann wird eine solche Klemmkontur innerhalb einer Verbindung zwischen einem Schlauchrollbalg einer Luftfeder und einem zugehörigen Anschlussteil nutzbar, wobei der Schlauchrollbalg mit Hilfe eines Spannringes im Verbindungsbereich des Anschlussteils auf einer erfindungsgemäßen Klemmkontur aufgespannt ist.

Eine Fahrzeug-Luftfeder oder ein Fahrzeug-Luftdämpfer sind besonders geeignete Einrichtungen, in denen eine solche Verbindung zwischen Schlauchrollbalg und Luftfederdeckel oder Abrollkolben einsetzbar ist.

Ein besonders geeignetes Verfahren zur Herstellung einer erfindungsgemäßen Klemmkontur besteht darin, dass die Dichtungsprofile mit einer Zwei-Komponenten-Spritzmethode innerhalb der Klemmkontur aufgebracht werden bzw. angespritzt werden. Die Zwei-Komponenten-Mischung reagiert dann nach dem Aufbringen auf der Klemmkontur aus, beispielsweise bei Kunststoffen durch Polymerisation und ist dann auch mit der Klemmkontur sicher verbunden.

Anhand eines Ausführungsbeispieles soll die Erfindung näher erläutert werden. Es zeigen
- Fig. 1: Eine Prinzipskizze einer Luftfeder für ein Kraftfahrzeug mit einer erfindungsgemäßen Klemmkontur
- Fig. 2: eine detaillierte Darstellung einer erste Ausführung einer erfindungsgemäßen Klemmkontur
- Fig. 3: eine detaillierte Darstellung einer weiteren Ausführung einer erfindungsgemäßen Klemmkontur

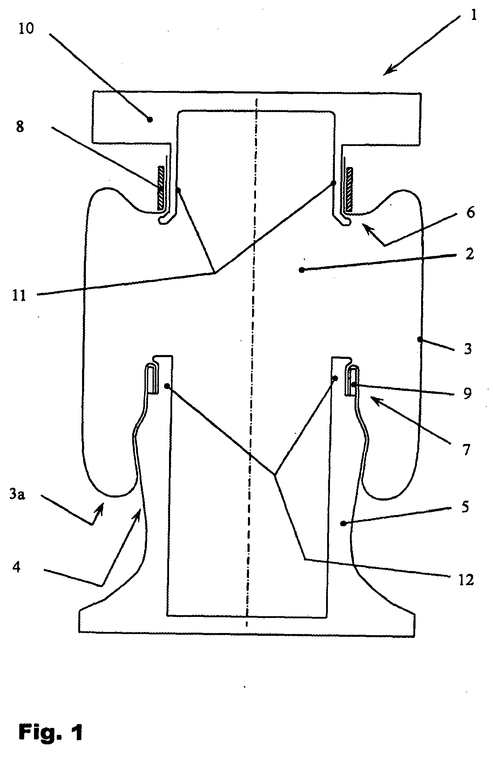

Die Fig. 1 zeigt eine Luftfeder 1 für ein Kraftfahrzeug, die einen mit Druckluft gefüllten Arbeitsraum 2 aufweist, der mindesten teilweise durch den Rollbalg 3 begrenzt wird, der eine Rollfalte 3a bildet. Der Rollbalg 3 rollt beim Ein- und Ausfedern des Fahrzeuges auf der rotationssymmetrischen Kontur 4 des Abrollkolbens 5 ab. An seinen Enden 6, 7 ist der Rollbalg mit Spannringen 8, 9 an den Anschlussteilen befestigt, nämlich mit seinem oberen Ende am Luftfederdeckel 10 und mit seinem unteren Ende am Abrollkolben 5. Die Befestigung erfolgt dabei in den Verbindungsbereichen 11 und 12, die jeweils eine Klemmkontur 13 oder 14 auf dem Außenumfang des jeweiligen Anschlussteiles aufweisen.

Der Luftfederdeckel 10 ist mit hier nicht näher dargestellten Karosserieteilen verbunden. Der Abrollkolben 5 ist über entsprechende Anschlussflansche mit einem hier ebenfalls nicht näher dargestellten Radträger des Fahrwerks verbunden.

Bei Luftdämpfern, d.h. bei Systemen, bei denen sowohl die Federung als auch die Dämpfung pneumatisch erfolgt, existiert ein zweiten Arbeitsraum, der Dämpfungsraum, der mit dem Arbeitsraum 2 über Strömungsventile verbunden ist.

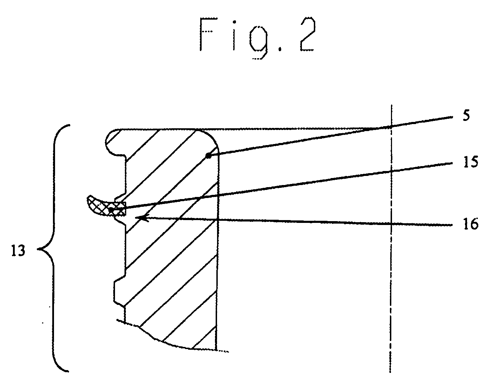

Fig. 2 zeigt in prinzipieller, aber vergrößerter Darstellung eine erste Ausführung einer erfindungsgemäßen Klemmkontur 13, die auf der Außenoberfläche des Abrollkolbens 5 ausgebildet ist. Innerhalb der Klemmkontur 13 ist eine Dichtungsprofil 15 in Form einer Dichtlippe angeordnet und mit der Klemmkontur fest 13 verbunden. Das Dichtungsprofil 15 ist dabei in einer auf der Außenoberfläche der Klemmkontur 13 angeordneten Nut 16 eingesetzt, ist in Richtung des Schlauches oder Balges aus der Profillinie der Klemmkontur vorspringend ausgebildet und besteht aus einem zum Material der Klemmkontur unterschiedlichen Material. Die Klemmkontur 13 ist Teil des Abrollkolbens 5, der aus Hartkunststoff besteht, während das Dichtungsprofil 15 aus einem weichen Kunststoff besteht, der mit der Klemmkontur 13 und in der Nut 16 zusätzlich durch Kleben verbunden ist.

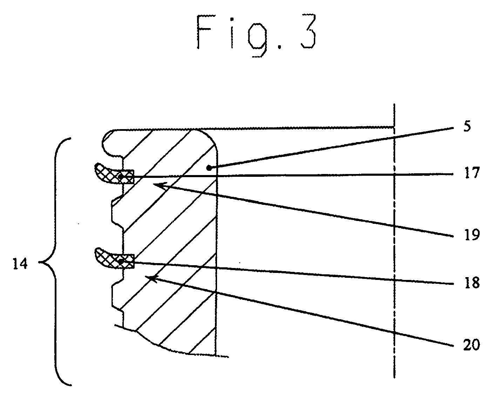

Fig. 3 zeigt eine weitere Ausführung einer erfindungsgemäßen Klemmkontur 14 auf der Außenoberfläche eines Abrollkolbens 5. Innerhalb der Klemmkontur 14 sind zwei Dichtungsprofile 17 und 18 aus Gummi angeordnet und zusätzlich durch Vulkanisation mit der Klemmkontur 14 fest verbunden. Auch hier sind die Dichtungsprofile 17 und 18 in auf der Außenoberfläche der Klemmkontur 14 angeordneten Nuten 19 und 20 eingesetzt.

### Bezugszeichenliste

### (Teil der Beschreibung)

- 1.: Luftfeder
- 2.: Arbeitsraum
- 3.: Rollbalg
- 3a: Rollfalte
- 4.: Rotationssymmetrische Kontur
- 5.: Abrollkolben
- 6.: Oberes Rollbalgende
- 7.: Unteres Rollbalgende
- 8.: Oberer Spannring
- 9.: Unterer Spannring
- 10.: Luftfederdeckel
- 11.: Verbindungsbereich mit Klemmkontur
- 12.: Verbindungsbereich mit Klemmkontur
- 13.: Klemmkontur
- 14.: Klemmkontur
- 15.: Dichtungsprofil
- 16.: Nut
- 17.: Dichtungsprofil
- 18.: Dichtungsprofil
- 19.: Nut
- 20.: Nut

## Patentansprüche

1. Verbindung zwischen einem Schlauchrollbalg einer Luftfeder und einem zugehörigen Anschlussteil, wobei der Schlauchrollbalg mit Hilfe eines Spannringes im Verbindungsbereich des Anschlussteils auf einer auf der Außenoberfläche des Anschlussteils (5,10) ausgebildeten Klemmkontur (13, 14) aufgespannt ist
- wobei die Klemmung des Schlauchrollbalges auf der Außenoberfläche der Klemmkontur durch geeignete Spannmittel (8, 9) erfolgt
**dadurch gekennzeichnet,**
- **dass** innerhalb der Klemmkontur (13, 14) Dichtungsprofile (15, 17, 18) angeordnet und mit der Klemmkontur fest verbunden sind,
- wobei die Dichtungsprofile (15, 17, 18) aus einem zum Material der Klemmkontur unterschiedlichen Material bestehen, und
- die Dichtungsprofile (15, 17, 18) in Richtung des Schlauches oder Balges (3) aus der Profillinie der Klemmkontur (13, 14) vorspringend ausgebildet sind, und
- die Dichtungsprofile (15, 17, 18) aus einem im Vergleich zum Material der Klemmkontur und im Vergleich zum Material des Schlauches oder Balges weicheren Material ausgebildet sind..

2. Verbindung mit einer Klemmkontur nach Anspruch 1, bei der die Dichtungsprofile (15, 17, 18) in auf der Außenoberfläche der Klemmkontur angeordneten Nuten (16, 19, 20) eingesetzt sind.

3. Verbindung mit einer Klemmkontur nach Anspruch 1 oder 2, bei dem die Dichtungsprofile (15, 17, 18) mit der Klemmkontur durch Kleben oder Vulkanisieren verbunden sind.

4. Verbindung mit einer Klemmkontur nach einem der Ansprüche 1 bis 3, bei dem die Dichtungsprofile (15, 17, 18) aus Kunststoff bestehen.

5. Verbindung mit einer Klemmkontur nach einem der Ansprüche 1 bis 3, bei dem die Dichtungsprofile (15, 17, 18) aus Gummi bestehen.

6. Verbindung mit einer Klemmkontur nach einem der Ansprüche 1 bis 5, bei dem die Dichtungsprofile (15, 17, 18) als sich zu ihrem dichtenden Ende verjüngende Dichtlippen ausgebildet sind.

7. Verbindung mit einer Klemmkontur nach einem der Ansprüche 1 bis 6, bei der im Klemmbereich Erhebungen und Vertiefungen vorgesehen sind.

8. Fahrzeug-Luftfeder oder -Luftdämpfer mit einer Verbindung zwischen Schlauchrollbalg und Luftfederdeckel oder Abrollkolben nach einem der Ansprüche 1 bis 7.

9. Verfahren zur Herstellung einer Verbindung mit einer Klemmkontur nach Anspruch 1 bis 7, bei dem die Dichtungsprofile mit einer Zwei-Komponenten-Spritzmethode innerhalb der Klemmkontur aufgebracht werden.

## Claims

1. Connection between a tubular rolling lobe of an air spring and an associated connection part, the tubular rolling lobe being clamped with the aid of a clamping ring in the connecting region of the connection part on a clamping contour (13, 14) formed on the outer surface of the connection part (5, 10),
- the clamping of the tubular rolling lobe on the outer surface of the clamping contour taking place by suitable clamping means (8, 9), **characterized**
- **in that** sealing profiles (15, 17, 18) are arranged within the clamping contour (13, 14) and fixedly connected to the clamping contour,
- the sealing profiles (15, 17, 18) consisting of a material that is different from the material of the clamping contour, and
- the sealing profiles (15, 17, 18) are formed as projecting out of the profile line of the clamping contour (13, 14) in the direction of the tube or lobe (3), and
- the sealing profiles (15, 17, 18) are formed from a material that is softer in comparison with the material of the clamping contour and in comparison with the material of the tube or lobe.

2. Connection with a clamping contour according to Claim 1, in which the sealing profiles (15, 17, 18) are inserted in grooves (16, 19, 20) arranged on the outer surface of the clamping contour.

3. Connection with a clamping contour according to Claim 1 or 2, in which the sealing profiles (15, 17, 18) are connected to the clamping contour by adhesive bonding or vulcanizing.

4. Connection with a clamping contour according to one of Claims 1 to 3, in which the sealing profiles (15, 17, 18) consist of plastic.

5. Connection with a clamping contour according to one of Claims 1 to 3, in which the sealing profiles (15, 17, 18) consist of rubber.

6. Connection with a clamping contour according to one of Claims 1 to 5, in which the sealing profiles (15, 17, 18) are formed as sealing lips tapering toward their sealing end.

7. Connection with a clamping contour according to one of Claims 1 to 6, in which elevations and depressions are provided in the clamping region.

8. Vehicle air spring or air damper with a connection between the tubular rolling lobe and the air-spring cover or rolling piston according to one of Claims 1 to 7.

9. Method for producing a connection with a clamping contour according to Claims 1 to 7, in which the sealing profiles are applied by a two-component spraying method within the clamping contour.

## Revendications

1. Connexion entre un soufflet roulant tubulaire d'un ressort pneumatique et une partie de raccordement associée, le soufflet roulant tubulaire étant serré à l'aide d'une bague de serrage dans la région de connexion de la partie de raccordement sur un contour de serrage (13, 14) réalisé sur la surface extérieure de la partie de raccordement (5, 10),
- le serrage du soufflet roulant tubulaire sur la surface extérieure du contour de serrage s'effectuant par le biais de moyens de serrage appropriés (8, 9),
**caractérisée en ce que**
- des profils d'étanchéité (15, 17, 18) sont disposés à l'intérieur du contour de serrage (13, 14) et sont connectés fixement au contour de serrage,
- les profils d'étanchéité (15, 17, 18) se composent d'un matériau différent du matériau du contour de serrage, et
- les profils d'étanchéité (15, 17, 18) sont réalisés de manière à faire saillie hors de la ligne de profil du contour de serrage (13, 14) dans la direction du tuyau ou du soufflet (3), et
- les profils d'étanchéité (15, 17, 18) sont réalisés en un matériau plus souple par comparaison avec le matériau du contour de serrage et par comparaison avec le matériau du tuyau ou du soufflet.

2. Connexion avec un contour de serrage selon la revendication 1, dans laquelle les profils d'étanchéité (15, 17, 18) sont insérés dans des rainures (16, 19, 20) disposées sur la surface extérieure du contour de serrage.

3. Connexion avec un contour de serrage selon la revendication 1 ou 2, dans laquelle les profils d'étanchéité (15, 17, 18) sont connectés au contour de serrage par collage ou par vulcanisation.

4. Connexion avec un contour de serrage selon l'une quelconque des revendications 1 à 3, dans laquelle les profils d'étanchéité (15, 17, 18) se composent de plastique.

5. Connexion avec un contour de serrage selon l'une quelconque des revendications 1 à 3, dans laquelle les profils d'étanchéité (15, 17, 18) se composent de caoutchouc.

6. Connexion avec un contour de serrage selon l'une quelconque des revendications 1 à 5, dans laquelle les profils d'étanchéité (15, 17, 18) sont réalisés sous forme de lèvres d'étanchéité se rétrécissant vers leur extrémité d'étanchéité.

7. Connexion avec un contour de serrage selon l'une quelconque des revendications 1 à 6, dans laquelle, dans la région de serrage, sont prévus des rehaussements et des renfoncements.

8. Ressort pneumatique ou amortisseur pneumatique de véhicule comprenant une connexion entre un soufflet roulant tubulaire et un couvercle de ressort pneumatique ou un piston déroulant selon l'une quelconque des revendications 1 à 7.

9. Procédé de fabrication d'une connexion avec un contour de serrage selon les revendications 1 à 7, dans lequel les profils d'étanchéité sont appliqués avec un procédé de pulvérisation à deux composants à l'intérieur du contour de serrage.
